# FASCICULE DE BREVET EUROPEEN

(11) **EP 3 885 672 B1**
(45) Date de publication et mention de la délivrance du brevet: **27.11.2024**
(21) Numéro de dépôt: 21164702.9
(22) Date de dépôt: 24.03.2021
(51) Int. Cl.: F25B 15/00, F25B 33/00, F28C 3/08, F28D 3/04, F28D 9/00, F28F 25/08, F28F 3/02

(54) **GÉNÉRATEUR COMPRENANT UNE FONCTION DE RECTIFICATION, UNE MACHINE À ABSORPTION COMPRENANT LEDIT GÉNÉRATEUR ET UN PROCÉDÉ DE PRODUCTION DE VAPEUR DE FLUIDE FRIGORIGÈNE PAR LEDIT GÉNÉRATEUR**
GENERATOR MIT EINER REKTIFIKATIONSFUNKTION, UNE ABSORPTIONSMASCHINE, DIE DIESEN GENERATOR UMFASST, UND EIN VERFAHREN ZUR ERZEUGUNG VON KÄLTEMITTELDAMPF DURCH DEN GENERATOR
GENERATOR INCLUDING A RECTIFICATION FUNCTION, AN ABSORPTION MACHINE COMPRISING SAID GENERATOR AND A METHOD OF PRODUCING REFRIGERANT VAPOUR BY SAID GENERATOR

(30) Priorité: 25.03.2020 FR 2002911
(43) Date de publication de la demande: 29.09.2021
(73) Titulaire: Commissariat à l'Energie Atomique et aux Energies Alternatives, 75015 Paris (FR); Centre national de la recherche scientifique, 75016 Paris (FR); Université Savoie Mont Blanc, 73000 Chambéry (FR)
(72) Inventeur: WIRTZ, Mathilde, 38054 Grenoble Cedex 09 (FR); BOUDEHENN, François, 38054 Grenoble Cedex 09 (FR); PHAN, Hai Trieu, 38054 Grenoble Cedex 09 (FR); STUTZ, Benoit, 38054 Grenoble Cedex 09 (FR)
(74) Mandataire: Hautier IP

(56) Documents cités:
- EP-A1- 3 584 518
- WO-A1-96/16303
- CN-A- 103 983 046
- US-A- 5 660 049

## Description

### DOMAINE TECHNIQUE

La présente invention concerne le domaine des systèmes thermodynamiques avec cycle à absorption. Elle trouve pour application particulièrement avantageuse la mise en oeuvre de cycles à absorption dont la solution de travail comprend un couple fluide frigorigène/absorbant dont l'un est de l'eau. La présente invention concerne un générateur et un procédé de production de vapeur de fluide frigorigène par un tel générateur.

### ETAT DE LA TECHNIQUE

Dans un contexte de réchauffement climatique et d'accroissement de la population urbaine, les besoins en froid pour les bâtiments tertiaires et les besoins pour des applications industrielles sont en constante augmentation.

Les politiques énergétiques actuelles incluent les problématiques de valorisation de sources de chaleur de bas niveau thermique (chaleur fatale, énergie solaire thermique & réseaux de chaleur), qui sont non-fossiles et abondantes.

On connait les systèmes thermodynamiques avec cycle à absorption qui permettent de produire du froid à partir d'énergie thermique récupérée sur une source chaude.

Toutefois, l'une des limitations à ce développement est le coût d'investissement initial nécessairement très important. Pour cette raison, un développement important des machines doit être effectué pour en baisser les coûts. Il est donc nécessaire de répondre aux problématiques budgétaires et d'industrialisation susmentionnées.

Les problématiques techniques essentielles concernent notamment le composant de la machine connu sous la dénomination « rectifieur », connu également sous la dénomination « rectificateur ».

Dans une machine thermodynamique par absorption, le compresseur classique est remplacé par une gestion astucieuse et combinée de premier et deuxième fluides respectivement absorbant et réfrigérant, avec un transfert de masse par absorption du réfrigérant (par exemple de l'ammoniac) vers l'absorbant (par exemple de l'eau) réalisé dans un composant de la machine connu sous la dénomination « absorbeur ». À la sortie de l'absorbeur, la solution formée par le mélange entre le réfrigérant et l'absorbant après absorption est chauffé (par exemple grâce à un apport d'énergie solaire), dans un composant connu sous la dénomination « générateur », pour réaliser une désorption du réfrigérant et fournir une force motrice pour le circuit réfrigérant. À la sortie du générateur, le réfrigérant à l'état gazeux à la suite de la désorption circule dans le circuit de réfrigération tandis que l'absorbant est dirigé à l'état liquide vers l'absorbeur.

Le problème provient du fait que la phase gazeuse du fluide sortant du générateur, une fois séparée de la phase liquide, bien que contenant majoritairement du réfrigérant, peut également contenir des traces d'absorbant. Or, les machines à absorption utilisant des couples comme l'ammoniac et l'eau sont relativement sensibles à la qualité du réfrigérant issu de la désorption réalisée au sein du générateur. Ceci est particulièrement vrai pour les applications où la température d'évaporation du réfrigérant est basse, notamment négative. Dans le cas particulier où le réfrigérant est de l'ammoniac, son évaporation est perturbée par la présence de traces d'eau. Ces traces d'absorbant empêchent l'évaporation totale du réfrigérant lorsque l'évaporateur est réglé sur un niveau de surchauffe classique pour une machine thermodynamique utilisant de l'ammoniac pur. Il en résulte donc une perte de puissance et une instabilité de la boucle puisqu'une faible variation d'eau influe fortement sur le glissement de la température d'évaporation. Cette problématique concerne également plusieurs autres couples de réfrigérant et d'absorbant utilisés par les machines à absorption.

Dans ce contexte, le rectifieur d'une machine à absorption permet d'améliorer la qualité du réfrigérant, en éliminant la majeure partie d'absorbant encore contenu dans la phase gazeuse séparée à la sortie du générateur. Un principe de rectification consiste à refroidir cette phase gazeuse pour en condenser une fraction seulement, sachant que ces condensats sont fortement concentrés en absorbant. La fraction gazeuse restante non condensée dispose d'une concentration plus forte en réfrigérant qu'à l'entrée du rectifieur. La difficulté de la rectification consiste à concilier les fonctions suivantes : l'ajout d'un organe d'échange thermique réalisant cette condensation, sur la ligne gazeuse du circuit réfrigérant, le drainage des condensats créés vers le circuit de retour vers l'absorbeur. La circulation à travers un condenseur génère une perte de charge par frottements visqueux et donc une perte de pression. La fraction condensée doit circuler en sens inverse pour rejoindre le circuit de retour des liquides vers l'absorbeur. Une force motrice supplémentaire est donc nécessaire.

Ainsi, il est connu d'avoir à la sortie du générateur un rectifieur connecté fluidiquement pour assurer la rectification de la vapeur du fluide frigorigène avant son entrée dans le condenseur. L'accumulation des composants fait perdre en compacité à la machine, la dynamique des échanges thermiques et massiques est également réduite en efficacité, car les fluides ont un parcours hydraulique plus long. Le document EP 3 584 518 décrit notamment ce type de solution dans un dispositif de production de froid par une machine à absorption pour un véhicule en utilisant les gaz d'échappement comme source chaude.

Il existe également des développements pour améliorer les générateurs et leur permettre de produire directement une vapeur de fluide frigorigène contenant moins de vapeur d'absorbant. La thèse de James Golden, « Ammonia-water désorption in flooded columns », Georgia Institute of Technology, 2012 décrit un système de désorption à colonne noyée ; composant unique, qui utilise le procédé d'ébullition pour produire de la vapeur d'ammoniac à contre-courant, à partir d'une solution NH₃/H₂O. La solution concentrée entre dans le composant par le haut et descend dans plusieurs colonnes parallèles remplies elles-mêmes de solution. Un fluide caloporteur s'écoule vers le haut à travers des plaques à microcanaux sur les surfaces avant et arrière de chaque colonne parallèle inondée, transférant ainsi la chaleur à la solution. Cette solution présente de bons résultats concernant la pureté de la vapeur générée. Ici, il n'y a pas de phase de rectification distincte dans le composant. De plus, la colonne est large et haute, et prend donc une place non négligeable dans la machine à absorption.

On connait notamment suivant ce type de développement le document WO 96/16303 A1 concernant un appareil générateur-absorbeur permettant de produire directement une vapeur de fluide frigorigène contenant moins de vapeur d'absorbant. En plus, le document WO 96/16303 A1 dévoile un générateur selon le préambule de la revendication 1.

On connait par ailleurs, le document US 5 660 049 qui présente un sorbeur avec plusieurs flux ascendants égalisés à pression co-courant ou le document CN103983046 qui décrit un générateur à plaque immergé et un absorbeur à film tombant.

Un objet de la présente invention est donc de proposer une solution compacte qui permette d'obtenir une vapeur de fluide frigorigène purifiée après génération et rectification.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un générateur selon la revendication 1 pour machine à absorption comprenant un bâti définissant un volume intérieur comprenant une première zone comprenant un désorbeur configuré pour recevoir une solution de travail comprenant un fluide frigorigène et un absorbant et destiné à la production de vapeur de fluide frigorigène caractérisé en ce que le désorbeur comprend un échangeur à plaques à films tombants et en ce que le bâti comprend une deuxième zone agencée au-dessus de la première zone comprenant un rectifieur adiabatique comprenant une pluralité de plaques adiabatiques et destinée à l'élimination de trace de vapeur d'absorbant dans la vapeur de fluide frigorigène produite dans la première zone, le désorbeur et le rectifieur sont fluidiquement connectés par superposition de la pluralité de plaques adiabatiques et des plaques à films tombants, les plaques adiabatiques et les plaques à films tombants étant agencées les unes par rapport aux autres de sorte que les plaques à films tombants s'étendent dans un plan contenant les directions x et y et les plaques adiabatiques s'étendent dans un plan contenant les directions y et z .

Ainsi, le générateur selon l'invention permet de proposer un composant unique intégrant des fonctions de génération de vapeur de fluide frigorigène et de rectification de celle-ci par élimination partielle de traces de vapeur d'absorbant générées en parallèle. Le générateur selon l'invention permet de réduire l'encombrement en proposant un seul composant compact. Avantageusement, le générateur selon l'invention permet également de limiter les pertes hydrodynamiques dues aux passages des fluides dans plusieurs composants et dans les canalisations les reliant. La combinaison directe de l'étape de génération de vapeur et de l'étape de rectification de la vapeur permet d'améliorer sensiblement les échanges thermiques et massiques.

Avantageusement, le générateur selon l'invention permet de s'affranchir de la présence de bouteilles de séparation présentes couramment dans les machines à absorption. Cela permet de réduire les coûts et l'encombrement des machines à absorption.

Le rectifieur est avantageusement adiabatique c'est-à-dire sans refroidissement actif par une source extérieure autre que des pertes thermiques.

De manière facultative, le rectifieur est configuré pour avantageusement participer à la distribution de la solution de travail au désorbeur.

Un autre aspect concerne une machine à absorption pour la production de froid comprenant un absorbeur, un générateur, un condenseur, un évaporateur et un circuit fluidique d'absorption apte à recevoir une solution de travail comprenant un fluide frigorigène et un absorbant, le circuit fluidique reliant le générateur au condenseur, le condenseur à l'évaporateur, l'évaporateur à l'absorbeur et l'absorbeur au générateur caractérisé en ce que le générateur est un générateur selon l'invention.

Un autre aspect concerne un procédé selon la revendication 9 de production de vapeur de fluide frigorigène par un générateur selon l'invention caractérisé en ce qu'il comprend
- la circulation d'une source de chaleur dans la première zone suivant une direction ascendante, et
- une circulation de solution de travail dans la deuxième zone puis dans la première zone suivant une direction descendante à contre-courant de la source de chaleur dans la première zone, et
- une circulation de vapeur de fluide frigorigène, produite dans la première zone, dans la première zone puis dans la deuxième zone suivant une direction ascendante à contre-courant de la solution de travail.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma de fonctionnement d'une machine à absorption ammoniac-eau.
La figure 2 représente un schéma simplifié du générateur selon l'invention illustrant la circulation des fluides.
La figure 3 représente une vue éclatée d'un générateur selon l'invention illustrant la circulation des fluides
La figure 4 représente un schéma d'une vue partielle de la jonction de la première zone et de la deuxième zone du générateur selon l'invention.
La figure 5 représente une vue en perspective d'un dispositif de rectification selon un aspect de l'invention.
La figure 6 représente une vue de détail du dispositif de distribution du dispositif de rectification selon un aspect de l'invention vue en perspective.

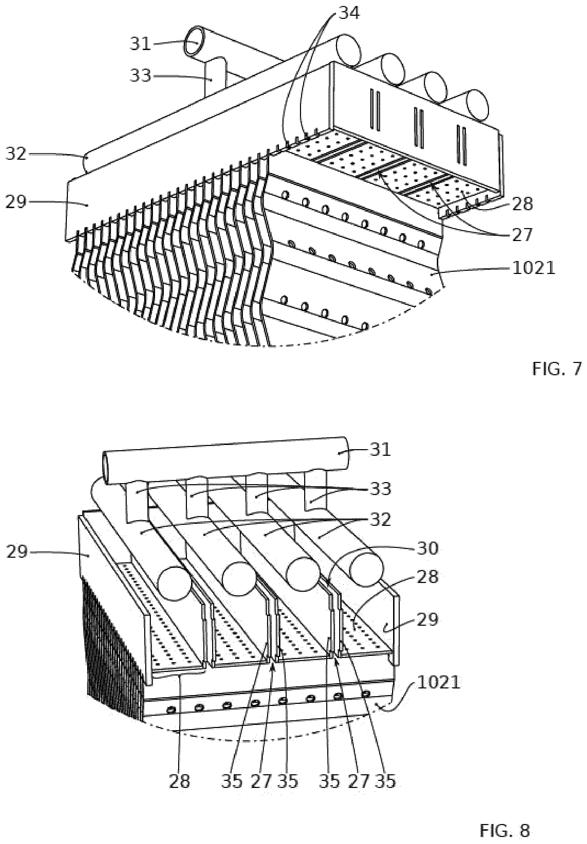

La figure 7 représente une vue de détail du dispositif de distribution selon un aspect de l'invention associé au rectifieur vue du dessous en perspective.
La figure 8 représente une vue de détail du module de distribution selon un aspect de l'invention vue de face en perspective.

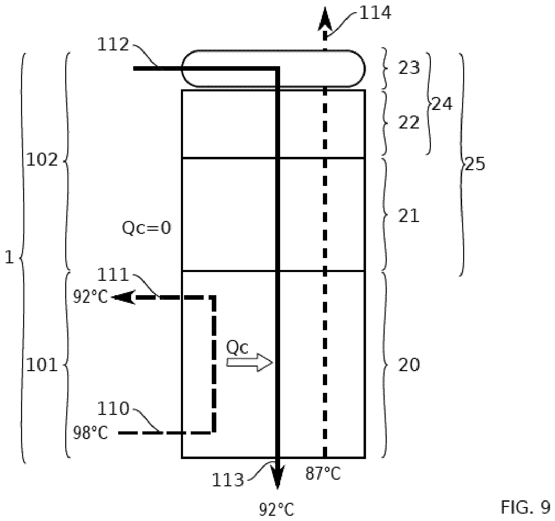

La figure 9 représente un schéma simplifié d'un générateur muni d'un dispositif de rectification illustrant la circulation des fluides.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Le désorbeur comprend un échangeur à plaques à films tombants. Le choix d'un échangeur à plaques contribue à la compacité du générateur.

Le rectifieur comprend une pluralité de plaques dites avantageusement plaques adiabatiques 1021 en particulier dans le cas dans lequel le rectifieur est un rectifieur adiabatique. Les plaques adiabatiques participent à la distribution uniforme de la solution de travail au désorbeur et plus particulièrement aux plaques de l'échangeur.

Le désorbeur et le rectifieur sont fluidiquement connectés par superposition de la pluralité de plaques adiabatiques 1021 et des plaques 1002, 1003 à films tombants. Avantageusement, pluralité de plaques adiabatiques 1021 est superposées aux des plaques 1002, 1003 à films tombants. La continuité entre les plaques adiabatiques et les plaques à film tombant participe à la continuité fluidique, du film tombant liquide et de la vapeur générée, entre le rectifieur et le générateur.

Les plaques adiabatiques 1021 et les plaques à films tombants 1002, 1003 sont agencées les unes par rapport aux autres de sorte que les plaques à films tombants 1002, 1003 s'étendent dans un plan contenant les directions x et y et les plaques adiabatiques s'étendent dans un plan contenant les directions y et z. Avantageusement, les plaques adiabatiques et les plaques à films tombants sont agencées perpendiculairement les unes par rapport aux autres avec leur direction longitudinale parallèle. Le fait de placer les plaques adiabatiques perpendiculaires aux plaques à films tombants permet de faciliter l'écoulement venant des plaques adiabatiques préférentiellement directement dans les corrugations des plaques à films tombants, avec une meilleure répartition.

Selon un exemple, le bâti comprend :
- au moins une entrée 112 configurée pour amener la solution de travail riche en fluide frigorigène dans la deuxième zone 102,
- au moins une sortie 113 configurée pour assurer la sortie de la solution de travail pauvre en fluide frigorigène de la première zone 101,
- au moins une sortie 113 configurée pour assurer la sortie de la solution de travail pauvre en fluide frigorigène de la première zone 101,
- au moins une sortie 112 configurée pour assurer la sortie de la vapeur de fluide frigorigène produite de la deuxième zone 102,
- au moins une entrée 110 configurée pour amener une source chaude dans la première zone 101,
- au moins une sortie 111 configurée pour assurer la sortie de la source chaude refroidie de la première zone 101.

Selon un exemple, l'entrée 112 configurée pour amener la solution de travail riche en fluide frigorigène dans la deuxième zone 102 et la sortie 113 configurée pour assurer la sortie de la solution de travail pauvre en fluide frigorigène de la première zone 101 sont agencées pour assurer une circulation descendante de la solution de travail au travers de la deuxième zone 102 puis de la première zone 101.

Selon un exemple, la sortie 114 configurée pour assurer la sortie de la vapeur de fluide frigorigène produite de la deuxième zone 102) est agencée pour assurer une circulation de la vapeur produite ascendante au travers de la première zone 101 puis de la deuxième zone (102).

Selon un exemple, l'entrée 110 configurée pour amener une source chaude dans la première zone 101 et la sortie 111 configurée pour assurer la sortie de la source chaude refroidie de la première zone 101 sont agencées pour assurer une circulation ascendante de la source chaude au travers de la première zone 101.

Selon un exemple, le bâti 100 est configuré pour former un générateur 1 monobloc intégrant le désorbeur et le rectifieur.

Selon un exemple, la machine à absorption comprend une solution de travail comprenant le couple ammoniac/eau (NH₃/H₂O).

Selon un autre aspect l'invention concerne un dispositif de rectification de vapeur d'un fluide frigorigène comprenant :
- Un rectifieur, avantageusement adiabatique, destiné à l'élimination de trace de vapeur d'absorbant dans de la vapeur d'un fluide frigorigène, ou avantageusement par échange thermique et de masse de la vapeur du fluide frigorigène avec une solution de travail riche en fluide frigorigène et
- un système de distribution configuré pour distribuer la solution de travail riche en fluide frigorigène dans le rectifieur,

Caractérisé en ce que le système de distribution comprend:
- Un module de distribution configuré pour assurer la répartition de la solution de travail riche en fluide frigorigène dans le rectifieur et l'échappement de la vapeur de fluide frigorigène provenant du rectifieur,
- Un module de prédistribution configuré pour assurer une répartition et une distribution de la solution de travail riche en fluide frigorigène dans le module de distribution,
- le module de distribution étant agencé au-dessus du rectifieur, le module de prédistribution étant agencé au-dessus du module de distribution.

Le dispositif de rectification selon l'invention assure la rectification de la vapeur de fluide frigorigène avantageusement par échange thermique et de masse avec la solution riche en fluide frigorigène qui joue alors le rôle de fluide caloporteur refroidissant la vapeur de fluide frigorigène pour condenser les vapeurs d'absorbant qui sont récupérées par la solution riche en fluide frigorigène. Le dispositif de rectification assure cette rectification grâce à une distribution optimisée de la solution de travail riche en fluide frigorigène et une évacuation de la vapeur de fluide frigorigène produite facilitée.

Cette invention concerne l'intégration dans un seul composant des fonctions de :
- Distribution de solution de travail par exemple de solution aqueuse d'ammoniac, permettant d'uniformiser le flux de solution le long des plaques d'un échangeur placé en dessous du système, pour une bonne répartition de la solution ;
- Rectification de la vapeur y circulant à contre-courant par ré-absorption partielle de la vapeur d'absorption d'eau par exemple présente, par la solution distribuée ici sous-refroidie.

Un autre aspect concerne un générateur pour machine à absorption comprenant un désorbeur configuré pour recevoir une solution de travail comprenant un fluide frigorigène et un absorbant et destiné à la production de vapeur de fluide frigorigène caractérisé en ce qu'il comprend un dispositif de rectification tel que décrit ci-dessus, le dispositif de rectification étant agencé directement au-dessus du désorbeur.

Un autre aspect concerne une machine à absorption pour la production de froid comprenant un absorbeur, un générateur, un condenseur, un évaporateur et un circuit fluidique d'absorption apte à recevoir une solution de travail comprenant un fluide frigorigène et un absorbant, le circuit fluidique reliant le générateur au condenseur, le condenseur à l'évaporateur (3), l'évaporateur à l'absorbeur et l'absorbeur au générateur caractérisé en ce qu'elle comprend un dispositif de rectification tel que décrit ci-dessus.

Selon un exemple, le module de distribution comprend un tamis collecteur de la solution de travail riche en fluide frigorigène et une pluralité d'éléments d'échappement de la vapeur de fluide frigorigène.

Cela assure une distribution homogène au rectifieur par stockage temporaire de la solution de travail riche en fluide frigorigène dans le tamis collecteur tout en ménageant des échappements de la vapeur facilitant sa sortie du rectifieur.

Selon un exemple, la pluralité d'éléments d'échappement de la vapeur de fluide frigorigène comprend des cheminées aménagées sur le tamis collecteur.

Les cheminées sont préférentiellement configurées pour ne pas collecter la solution de travail riche en fluide frigorigène.

Selon un exemple, la pluralité d'éléments d'échappement sont des bandes de passages aménagées sur le tamis collecteur configurées pour assurer l'échappement de la vapeur de fluide frigorigène et agencées parallèlement les unes aux autres et préférentiellement régulièrement définissant des bandes de tamis séparées par les bandes de passages.

Cette disposition laisse ainsi les différents flux de fluide solution de travail et vapeur de gaz circuler de manière optimisée.

Selon un exemple, le module de distribution comprend un réservoir à solution de travail riche en fluide frigorigène comprenant un cadre et un fond, le fond étant formé par le tamis comprenant la pluralité d'éléments d'échappement.

Cela permet d'avoir une quantité de solution de travail dans le module de distribution assurant la répartition homogène de la solution de travail dans le rectifieur.

Selon un exemple, le module de prédistribution comprend une pluralité de canalisations percées de trous, également dénommées flûtes, et avantageusement au moins une canalisation d'amenée de la solution de travail riche en fluide frigorigène dans la pluralité de flûtes, configurée pour alimenter le module de distribution. Préférentiellement, les flûtes sont agencées au-dessus du tamis et entre les cheminées d'échappement de la vapeur de fluide frigorigène.

Les trous des canalisations permettent de faire jaillir la solution de travail par des jets identiques dans le module de distribution.

Selon un exemple, les canalisations percées de trous sont agencées au regard des bandes de tamis.

Préférentiellement les canalisations percées de trous ne sont pas agencées au-dessus des éléments d'échappements c'est-à-dire des cheminées, c'est-à-dire des bandes de passages de la vapeur de fluide frigorigène remontant du rectifieur.

Selon un exemple, le rectifieur comprend une pluralité de plaques dites avantageusement adiabatiques, en particulier dans le cas dans lequel le rectifieur est un rectifieur adiabatique. Les plaques adiabatiques participent à la distribution uniforme de la solution de travail au désorbeur et plus particulièrement aux plaques de l'échangeur. Les plaques sont avantageusement agencées parallèlement les unes aux autres suivant une direction verticale, leur plan longitudinal s'étendant suivant une direction verticale.

Le rectifieur est préférentiellement un échangeur à films tombant. Préférentiellement, les plaques sont ondulées et préférentiellement perforées ce qui optimise les échanges thermiques et de masses entre la solution de travail et la vapeur de fluide frigorigène. Ainsi, dans le cadre d'échangeurs à films ruisselants, afin d'optimiser les échanges de chaleur et de masse entre les plaques, la surface mouillée doit être la plus grande possible. C'est pourquoi une bonne distribution de la solution sur les plaques est primordiale.

Selon un exemple, les plaques adiabatiques sont agencées perpendiculairement au plan du tamis.

Selon un exemple, les plaques adiabatiques sont en contact avec le tamis.

Selon un exemple, le module de distribution est configuré pour coopérer avec les plaques adiabatiques, préférentiellement le cadre du module de distribution comprend des encoches destinées à recevoir les plaques adiabatiques.

La présente invention concerne un générateur 1 pour la production de vapeur d'un fluide frigorigène. Le générateur 1 selon l'invention est avantageusement intégré dans un système thermodynamique à cycle à absorption c'est-à-dire une machine à absorption.

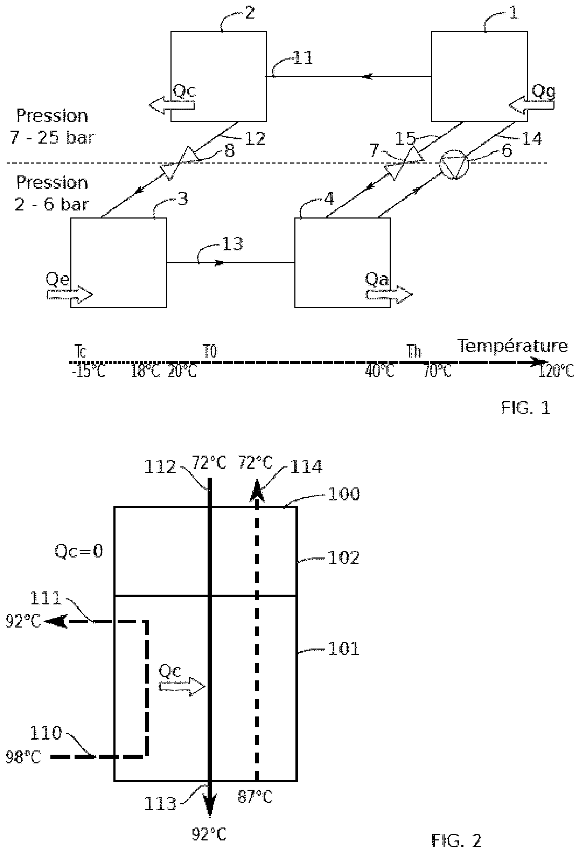

Le principe d'une machine à absorption va être décrit ci-après en référence à la figure 1.

Une machine à absorption est une pompe à chaleur réversible à « compression » thermique utilisant des couples réfrigérant/sorbant présentant de fortes affinités afin de remplacer la compression de vapeur des machines traditionnelles. Cette solution présente de faibles consommations électriques, l'énergie principale étant issue de la source thermique, permettant de limiter le coût de fonctionnement dans le cas de la valorisation d'une source d'énergie à bas coût tel que le gaz par exemple ou gratuite (tel que l'énergie solaire ou le rejet de chaleur par exemple. De plus, les fluides frigorigènes utilisés dans les machines à absorption ne présentent aucun impact environnemental : ni sur le réchauffement climatique (GWP pour Global warning potential = 0), ni sur la couche d'ozone (ODP pour Ozone depletion potential = 0).

Ce type de machine à absorption fonctionne grâce à la faculté de certains liquides d'absorber (réaction exothermique) et de désorber (réaction endothermique) une vapeur. Elles utilisent également le fait que la solubilité de cette vapeur dans le liquide dépende de la température et de la pression. Ainsi, ces machines utilisent comme solution de travail un mélange binaire, dont l'un des composants est plus volatil que l'autre, et constitue le fluide frigorigène.

Une machine à absorption est donc composée de 4 échangeurs principaux (générateur, absorbeur, condenseur et évaporateur), et avantageusement d'un échange d'optimisation du cycle (économiseur), d'une pompe à solution et de deux vannes de détente. Ce type de machine à absorption fonctionne selon trois niveaux de température : un niveau de température basse correspondant à la production de froid à l'évaporateur, un niveau de température intermédiaire correspondant à la température de condensation du fluide frigorigène, mais également à celle d'absorption du fluide frigorigène par l'absorbant et un niveau de température élevé correspondant à la température motrice du générateur.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe à solution, mais son travail est environ 96 fois inférieur au travail que le compresseur de vapeur doit fournir pour des conditions de fonctionnement similaires.

Selon l'invention, la machine à absorption comprend une solution de travail : fluide frigorigène, également dénommé réfrigérant un absorbant. Les concentrations de la solution de travail et de l'absorbant dans la solution de travail sont adaptées à la pression et la température de fonctionnement de la machine à absorption et inférieures à la concentration de cristallisation de la solution.

Selon un mode de réalisation préféré, une solution de travail utilisant le couple ammoniac /eau (NH₃/H₂O) peut être utilisée. Ce couple de solution de travail NH₃/H₂O donne la possibilité de produire du froid négatif par exemple jusqu'à -30°C, pour des températures ambiantes allant jusqu'à 55°C. Ce couple présente quant à lui une température de solidification basse, que ce soit celle de l'ammoniac ou celle du mélange ammoniac/eau. Ce couple est donc utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. C'est pourquoi la machine à absorption intègre un rectifieur pour rectifier la vapeur d'ammoniac produite, c'est-à-dire supprimer au moins partiellement une partie des traces d'eau emmenées avec la vapeur d'ammoniac en sortie du générateur.

La solution de travail est dite riche, car la concentration en fluide frigorigène est plus importante que dans la solution de travail dite pauvre. Dans la suite de la description, la solution riche et la solution pauvre font référence respectivement à la solution de travail riche en fluide frigorigène et à la solution de travail pauvre en fluide frigorigène.

Dans la suite de cette description, les connexions fluidiques sont préférentiellement directes c'est-à-dire sans autre élément sauf si cela est précisé.

La machine à absorption selon l'invention comprend :
Un générateur 1 configuré pour vaporiser le fluide frigorigène. Le générateur est connecté fluidiquement à l'absorbeur 4 et au condenseur 2. Le générateur 1 comprend une connexion fluidique14 avec l'absorbeur 4, possiblement avec un économiseur, permettant l'entrée de la solution de travail dite riche dans le générateur 1. Le générateur 1 comprend une connexion fluidique 15 avec l'absorbeur 4, possiblement avec un économiseur, permettant la sortie de la solution de travail dite pauvre hors du générateur 1. Avantageusement, un détendeur ou valve d'expansion de la solution 7 est disposé sur la connexion fluidique 15 permettant de détendre la pression de la solution de travail dite pauvre avant qu'elle soit transmise à l'absorbeur 4 par la connexion fluidique 15. Le générateur 1 comprend une connexion fluidique 11 avec le condenseur 2 permettant la sortie de la vapeur de fluide frigorigène hors du générateur 1. Le générateur 1 comprend également une entrée 110 et une sortie 111 de source chaude permettant l'apport de chaleur nécessaire à la vaporisation du fluide frigorigène.

Dans le générateur 1, la solution riche provenant de l'absorbeur 4 est chauffée par une source de chaleur pouvant être un fluide caloporteur à haute température qui traverse le désorbeur 20. Grâce à cette chaleur, une partie du fluide frigorigène en particulier l'ammoniac contenu dans la solution riche ainsi que des traces d'eau sont désorbées. La solution appauvrie issue de ce processus retourne à l'absorbeur 4. Le processus de désorption a lieu à haute pression, et requiert une quantité de chaleur (Qg). La vapeur émise par le désorbeur est acheminée vers le rectifieur intégré dans le générateur 1 selon l'invention. A titre d'exemple, le fluide caloporteur est choisi parmi de l'eau pressurisée, de l'eau glycolée, de l'huile, de la vapeur d'eau ou un gaz.

La machine à absorption selon l'invention comprend :
Un condenseur 2 configuré pour condenser la vapeur de fluide frigorigène. Le condenseur 2 est connecté fluidiquement au générateur 1 et à l'évaporateur 3. Le condenseur 2 comprend une connexion fluidique 11 issue du générateur 1 permettant l'entrée de la vapeur de fluide frigorigène dans le condenseur 2. Le condenseur 2 comprend une connexion fluidique 12 avec l'évaporateur 3, plus précisément avec un détendeur ou valve d'expansion du réfrigérant 8, permettant la sortie du fluide frigorigène à l'état liquide. Le condenseur 2 comprend également une entrée de fluide externe également dénommée source froide et une sortie du fluide externe ou de la source froide réchauffée.

Dans le condenseur 2, la vapeur de fluide frigorigène générée par le générateur 1 est refroidie par l'air ambiant ou par un fluide externe pour se condenser et devenir à nouveau liquide. Le fluide frigorigène liquide passe avantageusement par une vanne d'expansion (ou détendeur) 8 pour diminuer sa pression avant de pénétrer dans l'évaporateur 3. La condensation nécessite une haute pression et libère une quantité de chaleur (Qc).

Avantageusement, la centrale comprend un détendeur 8 agencé entre le condenseur 2 et l'évaporateur 3. Le détendeur 8 est configuré pour détendre le fluide frigorigène à l'état liquide issu du condenseur 2. Le détendeur 8 amène le fluide frigorigène à sa pression d'évaporation.

La machine à absorption selon l'invention comprend :
Un évaporateur 3 configuré pour vaporiser le fluide frigorigène. L'évaporateur 3 est connecté fluidiquement au condenseur 2 et à l'absorbeur 4. L'évaporateur 3 comprend une connexion fluidique 12 issue du condenseur 2, plus précisément avec un détendeur 8, permettant l'entrée du fluide frigorigène à l'état liquide dans l'évaporateur 3. L'évaporateur 3 comprend une connexion fluidique 13 avec l'absorbeur 4, permettant la sortie de la vapeur de fluide frigorigène. L'évaporateur comprend avantageusement une entrée et une sortie d'un fluide caloporteur destiné à être refroidi par l'évaporateur.

Dans l'évaporateur 3, le fluide frigorigène (selon un exemple de l'ammoniac presque pur) en phase liquide pénètre dans l'évaporateur 3, où un fluide caloporteur froid circule. Le fluide frigorigène prend la chaleur de la source froide pour s'évaporer, ce qui induit la production de froid de la machine d'absorption (Qe). Dans ce composant, la pression est faible et un apport de chaleur à basse température est nécessaire pour permettre l'évaporation du frigorigène.

La machine à absorption selon l'invention comprend :
Un absorbeur 4 configuré pour condenser la vapeur de fluide frigorigène issue de l'évaporateur 3. L'absorbeur 4 est connecté fluidiquement à l'évaporateur 3 et au générateur 1. L'absorbeur 4 comprend une connexion fluidique 13 issue de l'évaporateur 3 permettant l'entrée du fluide frigorigène à l'état de vapeur dans l'absorbeur 4. L'absorbeur 4 comprend une connexion fluidique 14 avec le générateur 1, plus précisément avec une pompe 6 destinée à mettre en circulation la solution de travail dans le circuit de circulation fluidique, plus précisément une solution de travail dite riche sort de l'absorbeur 4 en direction du générateur 1 par la connexion fluidique 14. Avantageusement, la pompe 6 est connectée fluidiquement à un économiseur au travers Dans l'absorbeur 4, la solution pauvre, avantageusement composée d'eau et d'une faible fraction de réfrigérant, est pompée depuis le générateur 1 et distribuée le long de l'absorbeur 4. La solution pauvre absorbe la vapeur du fluide frigorigène qui provient de l'évaporateur 3 et devient une solution enrichie, proche de sa condition saturée. La solution riche va au générateur 1. Le processus d'absorption se produit à basse pression, libérant une quantité de chaleur (Qa) dans l'air ambiant ou dans un circuit de refroidissement.

Le générateur 1 selon l'invention intègre les fonctions de désorbeur 20 et de rectifieur 21 et avantageusement de distribution.

Le générateur 1 comprend un bâti 100 définissant un volume intérieur. Le volume intérieur comprend avantageusement au moins deux zones distinctes, une première zone 101 et une deuxième zone 102. La première zone 101 et la deuxième zone 102 sont préférentiellement agencées l'une au-dessus de l'autre suivant une direction longitudinale s'étendant suivant la plus grande dimension du bâti 100. Sur les figures 2 à 4, la direction longitudinale du bâti 100 s'étend suivant l'axe y. La première zone 101 et la deuxième zone 102 sont superposées. La première zone 101 est agencée dans la partie inférieure du bâti 100 et la deuxième zone 102 est agencée dans la partie supérieure du bâti 100. La partie inférieure et la partie supérieure du bâti 100 s'entend relativement l'une par rapport à l'autre.

Selon l'invention, la première zone 101 est configurée pour recevoir un désorbeur 20. Le désorbeur 20 est destiné à permettre la production de vapeur du fluide frigorigène.

Le désorbeur 20 comprend un échangeur à plaques. Selon un mode de réalisation préféré, l'échangeur à plaques comprend une pluralité de plaques 1002, 1003. Préférentiellement, l'échangeur à plaques comprend une pluralité de plaques 1002 et une pluralité de plaques 1003 agencées pour définir des compartiments de circulation respectivement de la source chaude et de la solution de travail avec la vapeur de fluide réfrigérant produite.

Avantageusement, les plaques sont des plaques de métal minces qui sont séparées et étanchées par un jeu des joints en caoutchouc qui fournissent la distribution désirable de la solution de travail et de la source chaude sur la pluralité de plaques 1002, 1003.

Selon une possibilité préférée, la plaque 1002 présente une première face configurée pour assurer la circulation de la source chaude, et une deuxième face configurée pour assurer la circulation de la solution de travail et de la vapeur produite. La plaque 1003 présente une première face configurée pour assurer la circulation de la source chaude, et une deuxième face 10032 configurée pour assurer la circulation de la solution de travail et de la vapeur produite. Les premières faces des plaques 1002 et 1003 sont agencées face à face pour former un compartiment de circulation de la source chaude et les deuxièmes faces des plaques 1002 et 1003 sont agencées face à face pour former un compartiment de circulation de la solution de travail et de la vapeur produite.

L'échangeur à plaques formant le désorbeur 20 selon l'invention est un échangeur à plaques à films tombants. On entend par film tombant un écoulement continu de liquide le long d'une surface assortie d'un écoulement continu de gaz, les deux écoulements étant séparés par une interface liquide-vapeur au travers de laquelle des transferts de masse et de chaleur peuvent s'opérer. Le film de liquide est avantageusement de faible épaisseur de l'ordre de 0.1mm. Avantageusement ce type d'échangeur assure une grande surface d'échange avec la vapeur y circulant conjointement.

Selon l'invention, la deuxième zone 102 est configurée pour recevoir un rectifieur 21. Le rectifieur est destiné à permettre la purification de la vapeur du fluide frigorigène produite dans la première zone 101 au niveau du désorbeur 20.

Le rectifieur 21 permet d'éliminer au moins une partie des traces de l'absorbant, en particulier de l'eau, restant dans la vapeur du fluide frigorigène en particulier d'ammoniac, à la sortie du désorbeur 20. La rectification se fait à haute pression et libère une quantité de chaleur (Qr). Les condensats issus de la rectification retournent dans la solution faible tandis que la vapeur purifiée se dirige vers le condenseur 2.

Le rectifieur 21 comprend une pluralité de plaques adiabatiques 1021.

On entend par plaques adiabatiques 1021, par exemple des plaques assurant un refroidissement de la vapeur produite pour assurer la séparation des traces de l'absorbant.

Avantageusement, les plaques 1021 permettent un contact direct entre les films tombants de solution riche sur les plaques 1021 et la vapeur de fluide frigorigène remontant.

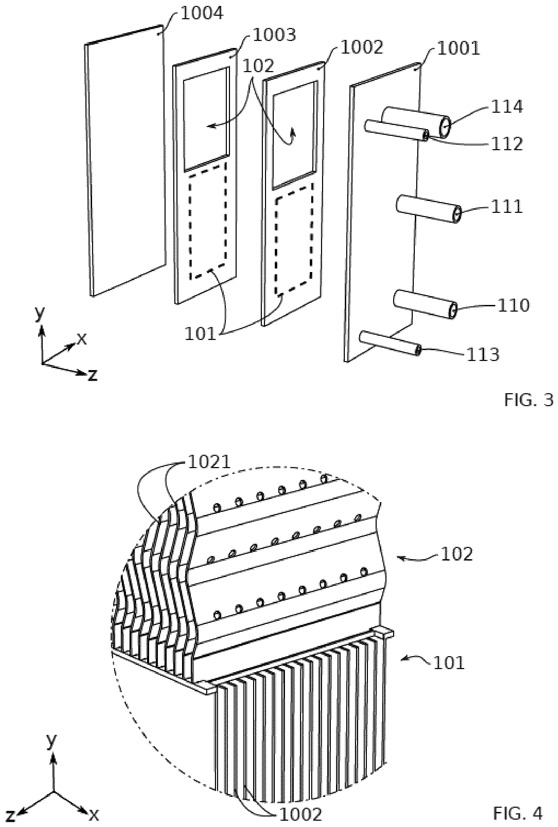

Selon une possibilité illustrée à la figure 4, les plaques adiabatiques 1021 sont des plaques fines de métal. Préférentiellement, les plaques 1021 sont ondulées pour assurer un ralentissement du flux de vapeur de fluide frigorigène remontant dans la deuxième zone 102 depuis la première zone 101. Les plaques peuvent être également droites c'est à dire planes. Cette configuration contribue également avantageusement à la répartition de la solution de travail dans la deuxième zone 102 pour être distribuée uniformément dans le désorbeur 20 agencé dans la première zone 101.

Préférentiellement, les plaques 1021 sont percées d'ouvertures traversantes permettant d'assurer un échange de masse entre la solution riche tombante et la vapeur de fluide frigorigène produite dans le désorbeur 20 et remontant. La circulation de la solution riche et de la vapeur se fait avantageusement à contre-courant. La vapeur de fluide frigorigène circulant entre les plaques 1021 à contre-courant est rectifiée par réabsorption partielle de la vapeur d'absorption présente dans la solution riche sous-refroidie.

Selon un aspect de l'invention, le rectifieur 21 est intégré dans un dispositif de rectification 25

Les plaques 1002, 1003 de l'échangeur à plaque du désorbeur 20 et les plaques adiabatiques 1021 du rectifieur 21 sont superposées. Avantageusement, les plaques 1002, 1003 de l'échangeur à plaque du désorbeur 20 et les plaques adiabatiques 1021 du rectifieur 21 sont superposées selon leur direction longitudinale. Préférentiellement, les plaques 1002, 1003 du désorbeur 20 et les plaques du rectifieur 1021 sont jointives c'est-à-dire qu'elles sont en contact direct, comme illustré en figure 4.

Les plaques 1002, 1003 du désorbeur 20 sont agencées dans la première zone 101 selon une orientation verticale. Les plaques 1002, 1003 du désorbeur 20 sont parallèles les unes aux autres. On entend que les plaques sont agencées de sorte que leur direction longitudinale c'est-à-dire la plus grande longueur est agencée parallèlement à la direction verticale. Préférentiellement, une face d'une plaque du désorbeur 20 définit une direction x comprise dans le plan de la face et une direction y orthogonale à la direction x et également comprise dans le plan de la face. La direction x étant préférentiellement parallèle à la largeur de la plaque, la direction y étant préférentiellement parallèle à la longueur de la plaque. L'épaisseur de la plaque correspond à la direction z, orthogonale au plan de la face contenant les directions x et y.

Avantageusement, les plaques 1021 du rectifieur 21 sont agencées dans la deuxième zone 102 selon une orientation verticale. Les plaques 1021 du rectifieur sont parallèles les unes aux autres. On entend que les plaques sont agencées de sorte que leur direction longitudinale c'est-à-dire la plus grande longueur est agencée parallèlement à la direction verticale.

Avantageusement, les plaques1021 du rectifieur sont disposées perpendiculairement aux plaques 1002, 1003 du désorbeur 20, comme illustré à la figure 4. Selon d'autres possibilités, les plaques 1021 du rectifieur peuvent être inclinées ou parallèle aux plaques 1002, 1003 du désorbeur 20.

Les plaques 1021 du rectifieur sont disposées relativement aux plaques 1002, 1003 du désorbeur 20 de sorte que le plan longitudinal de la plaque 1021 comprennent les directions y et z.

Selon une possibilité, le rectifieur 21 comprend un circuit de fluide de refroidissement assurant avantageusement la circulation du fluide de refroidissement le long des plaques 1021 adiabatiques, plus précisément de certaines plaques adiabatiques. Le circuit de fluide de refroidissement permet d'améliorer la rectification.

Le bâti 100 du générateur 1 est avantageusement un encadrement d'un échangeur à plaques. Selon un mode de réalisation préféré, le bâti 100 comprend une première plaque de fond 1001 et une deuxième plaque de fond 1002. La première plaque de fond 1001 et la deuxième plaque de fond 1002 sont agencées parallèlement aux plaques 1002, 1003 du désorbeur 20, comme illustré en figure 3.

Selon une possibilité, le bâti 100 comprend un rail supérieur, reposant sur la première plaque de fond 1001 et supporte avantageusement l'ensemble des plaques 1002, 1003 du désorbeur 20 et peut permettre leur déplacement facile par glissement pour le montage et les nettoyages éventuels.

Selon une possibilité, le bâti 100 comprend un guide inférieur, placé en partie basse de la première plaque de fond 1001 et maintient les plaques en position.

Selon une possibilité, le bâti 100 comprend des tirants répartis sur le pourtour du bâti, assurent le serrage des plaques entre la première plaque de fond 1001 et la deuxième plaque de fond 1002. Des vérins hydrauliques peuvent être prévus pour effectuer le serrage et le desserrage rapide de l'échangeur.

Selon un mode de réalisation préféré et illustré à la figure 3, les plaques 1002 et 1003 du désorbeur 20 sont configurées pour comprendre une première partie et une deuxième partie. La première partie des plaques 1002 et 1003 correspond à la fonction de désorbeur 20. La première partie des plaques 1002 et 1003 comprennent comme décrit ci-dessus chacune deux premières faces et deuxièmes sont configurées pour assurer la circulation respectivement de la source chaude et, de la solution de travail et de la vapeur produite. La première partie correspond à la partie inférieure des plaques 1002 et 1003. La deuxième partie des plaques 1002 et 1003 correspond à la partie supérieure desdites plaques. La deuxième partie est avantageusement une partie creuse, c'est-à-dire que dans leur deuxième partie, les plaques 1002, 1003 comprennent avantageusement uniquement un pourtour définissant une espace vide. Avantageusement, la deuxième partie des plaques 1002 et 1003 est destinée à recevoir le rectifieur 21 et plus précisément les plaques adiabatiques 1021 du rectifieur.

Cette configuration permet d'assurer une structure classique d'un échangeur à plaques pour le générateur 1 tout en intégrant la fonction de rectifieur 21.

Selon un mode de réalisation, la première plaque de fond 1001 ou la deuxième plaque de fond 1002 comprend les connexions fluidiques configurées pour assurer la circulation des différents fluides.

Selon une possibilité préférée illustrée à la figure 3, la première plaque de fond 1001 comprend :
partie des plaques 1002 et 1003 est destinée à recevoir le rectifieur 21 et plus précisément les plaques adiabatiques 1021 du rectifieur.

Cette configuration permet d'assurer une structure classique d'un échangeur à plaques pour le générateur 1 tout en intégrant la fonction de rectifieur 21.

Selon un mode de réalisation, la première plaque de fond 1001 ou la deuxième plaque de fond 1002 comprend les connexions fluidiques configurées pour assurer la circulation des différents fluides.

Selon une possibilité préférée illustrée à la figure 3, la première plaque de fond 1001 comprend :
- au moins une entrée 112 configurée pour amener la solution de travail riche en fluide frigorigène dans la deuxième zone 102,
- au moins une sortie 113 configurée pour assurer la sortie de la solution de travail pauvre en fluide frigorigène de la première zone 101,
- au moins une sortie 114 configurée pour assurer la sortie de la vapeur de fluide frigorigène produite de la deuxième zone 102,
- au moins une entrée111 configurée pour amener une source chaude dans la première zone,
- au moins une sortie 112 configurée pour assurer la sortie de la source chaude refroidie de la première zone.

Selon un mode de réalisation préféré, le générateur 1 selon l'invention est configuré pour assurer les circulations des différents fluides. Préférentiellement, les circulations des fluides sont réalisées comme décrits ci-après:
Le générateur 1 comprend avantageusement une circulation d'une source de chaleur dans la première zone 101 suivant une direction ascendante.

Le générateur 1 comprend avantageusement une circulation de solution de travail dans la deuxième zone 102 puis dans la première zone 101 suivant une direction descendante à contre-courant de la source de chaleur dans la première zone 101. La solution de travail s'écoule dans la deuxième zone 102 puis dans la première zone 101 par pression et sous l'effet de la gravité.

Le générateur 1 comprend avantageusement une circulation de vapeur de fluide frigorigène, produite dans la première zone 101, dans la première zone 101 puis dans la deuxième zone 102 suivant une direction ascendante à contre-courant de la solution de travail.

Dans le rectifieur 21, la distribution de la solution de travail riche, dite par exemple solution enrichie en ammoniac, se fait sur les plaques adiabatiques 1021 du rectifieur. Cette distribution est à double emploi : elle permet à la fois d'uniformiser le flux de solution le long des plaques 1002, 1003 du désorbeur 20 pour une bonne répartition de la solution. Et elle permet également de rectifier la vapeur y circulant à contre-courant par réabsorption partielle de la vapeur d'absorbant tel que l'eau présente, par la solution enrichie ici sous-refroidie.

Dans le désorbeur 20, la génération de vapeur se fait grâce à l'apport de chaleur de la source chaude circulant du bas vers le haut du désorbeur 20, à contre-courant de la solution de travail qui s'écoule de façon gravitaire. La solution de travail s'écoule sur les plaques 1002, 1003, par exemple dans un compartiment défini par les deuxièmes faces des plaques 1002 et 1003, tandis que la source chaude circule à contrecourant de bas en haut par exemple dans un compartiment défini par les premières faces des plaques 1002 et 1003. La solution de travail ainsi que la source chaude circulent sous forme de film ruisselant et permet une surface de contact plus importante pour les échanges de chaleur entre la source chaude et la solution de travail et les échanges de chaleur et de masse avec la vapeur générée le long du film, à contre-courant.

Le dispositif de rectification 25 comprend avantageusement un système de distribution 24. Le système de distribution 24 est configuré pour distribuer la solution de travail riche en fluide frigorigène dans le rectifieur 21.

Le système de distribution 24 est avantageusement agencé au-dessus du rectifieur 21. On entend par au-dessus que le système de distribution 24 est agencé à l'extrémité supérieure du rectifieur 21 et plus particulièrement au-dessus des plaques 1021 c'est-à-dire à l'extrémité supérieure des plaques 1021.

Le système de distribution 24 comprend avantageusement un module de distribution 22.

Le système de distribution 24 comprend avantageusement un module prédistribution 23.

Le module de distribution 22 est configuré pour assurer la répartition et la distribution de la solution de travail riche en fluide frigorigène dans le rectifieur 21. Avantageusement, le module de distribution 22 est également configuré pour permettre l'échappement de la vapeur de fluide frigorigène rectifiée produite dans le rectifieur 21.

Selon un mode de réalisation préféré, le module de distribution 22 comprend un tamis collecteur 26 destiné à recevoir la solution de travail riche en fluide frigorigène et une pluralité d'éléments d'échappement de la vapeur de fluide frigorigène rectifiée.

Le tamis collecteur 26 également dénommé bac de rétention comprenant un fond de distribution est configuré pour recevoir, et avantageusement stocké, temporairement de la solution de travail riche en fluide frigorigène pour permettre une distribution homogène au rectifieur 21.

Le tamis collecteur 26 a avantageusement une fonction de réservoir ou bac de rétention, dans lequel la solution riche est versée, préférentiellement après son passage dans le module de prédistribution. Le réservoir comprend, par exemple, un cadre 29. Le fond du réservoir de rétention est composé d'un tamis 26, conçu d'abord pour laisser la solution se répandre sur l'ensemble de la surface, puis la laisser passer à travers les perforations, et ainsi couler en dessous, avantageusement le long des plaques adiabatiques 1021 du rectifieur 21.

À titre d'exemple, une petite hauteur de solution va stagner en permanence sur le tamis 26, permettant la répartition homogène de la solution sur l'ensemble de la surface du réservoir avant l'alimentation des plaques 1021.

Le tamis 26 peut être une plaque poreuse ou bien une plaque perforée. Les perforations sont réparties de manière aléatoire, selon la structure envisagée : structure poreuse, lit de billes, paroi percée, etc. Le tamis est configuré pour permettre le passage de la solution à de multiples endroits.

Selon un mode de réalisation préféré, le module de distribution 22 est en contact des plaques 1021 du rectifieur 21, plus spécifiquement, le tamis 26 est en directement en contact avec les plaques adiabatiques 1021 où se forment le film tombant de solution riche.

Selon une possibilité, le cadre 29 et les plaques 1021 sont configurés pour coopérer. À titre d'exemple illustré, le cadre 29 comprend des encoches 34 régulièrement réparties sur au moins deux côtés parallèles du cadre 29 et configurées pour recevoir la partie supérieure des plaques 1021. À titre préféré, la partie supérieure des plaques 1021 comprend par exemple un décroché ou un autre moyen configuré pour coopérer avec une encoche 34 et permettant notamment d'assurer un blocage en translation horizontale de la plaque 1021 dans l'encoche 34.

Le module de distribution 22 comprend avantageusement des éléments d'échappement de la vapeur en provenance des parties inférieures du dispositif de rectification et en particulier du rectifieur 21.

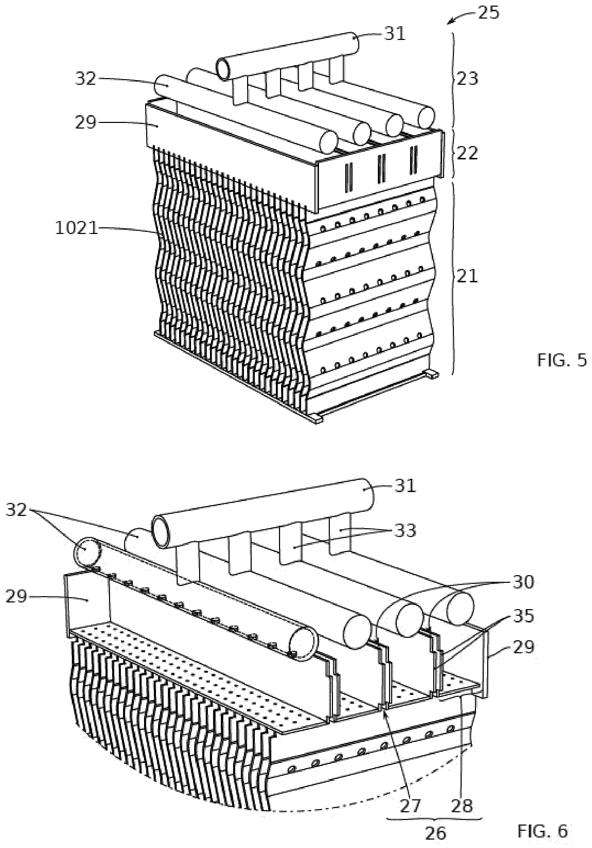

Selon un mode de réalisation, les éléments d'échappement définissent des bandes de passages 27 aménagées sur le tamis 26 assurant le passage de la vapeur remontant du rectifieur 21. Les bandes de passages 27 sont configurées pour assurer le passage de la vapeur tout en limitant des modifications dans l'écoulement de la solution riche au travers du tamis 26 et avantageusement sur les plaques 1021. À titre d'exemple notamment illustré en figures 4 à 6, les éléments d'échappement de la vapeur comprennent des cheminées 30 aménagées sur le tamis collecteur 26. Les cheminées 30 comprennent par exemple deux parois 35 parallèles l'une à l'autre agencées perpendiculairement au plan du tamis 26. Deux parois 35 se faisant face définissent une bande de passage 27. Les parois 35 sont avantageusement pleines. Les cheminées 30 sont avantageusement non alimentées en solution riche. Les cheminées 30 sont préférentiellement espacées régulièrement définissant préférentiellement des bandes de passages 27 parallèles les unes aux autres. Les bandes de passages 27 sont préférentiellement agencées perpendiculairement au plan des plaques 1021 du rectifieur 21.

Selon un mode de résolution, deux cheminées 30 définissent des bandes de tamis 28 qui sont alimentées en solution riche.

Préférentiellement, les bandes de tamis 28 sont plus larges que les bandes de passages 27. À titre d'exemple un rapport de 1 à 5 voire 1 à 10 peut être prévu. Préférentiellement, les bandes de passages 27 sont configurés pour ne pas perturber l'écoulement de liquide sur les plaques agencées avantageusement sous le tamis.

Après être remontée le long des plaques adiabatiques 1021 du rectifieur 21 situées en partie basse du dispositif de rectification 25, la vapeur générée à contre-courant dans le rectifieur 21 va s'échapper en partie haute de celui-ci. Pour lui permettre un passage aisé, les bandes de passage 27définies notamment par des cheminées 30 sont aménagées dans le tamis 26. Elles créent ainsi des zones de jonction entre les plaques 1021 et le module de distribution 24 qui ne sont pas alimentées par la solution riche. En effet, cela donne des chemins régulièrement espacés au sommet de chaque plaque 1021 pour que la vapeur puisse s'échapper. Cela empêche le regroupement de celle-ci à un seul endroit, s'il n'y avait qu'une sortie par exemple. Préférentiellement, la largeur des bandes de passages 27 étant faible relativement à la largeur des bandes de tamis 28, cela n'aura que peu d'impact sur l'écoulement de la solution sur les plaques 1021. La surface d'évacuation de la vapeur est ainsi plus grande et mieux répartie sur tout le tamis 26.

Le système de distribution 24 comprend avantageusement un module de prédistribution 23. Le module de prédistribution 23 est préférentiellement agencé au-dessus du module de distribution 22. Le module de pré distribution 22 est configuré pour distribuer et répartir la solution riche dans le module de distribution 22.

Le module de prédistribution 23 est destiné à assurer l'alimentation en solution riche du module de distribution et préférentiellement l'alimentation des bandes de tamis 28 et la non-alimentation 27 des bandes de passages 27.

Selon un mode de réalisation, le module de prédistribution 23 comprend une pluralité de canalisations 32 agencées préférentiellement au-dessus des bandes de tamis 28 pour assurer l'alimentation en solution riche au tamis 26.

À titre d'exemple préféré, les canalisations 32 sont agencées de sorte que l'axe longitudinal de chaque canalisation 32 s'étend parallèlement au plan du tamis 26. A titre préféré, le tamis 26 et les canalisations 32 s'étendent suivant une direction horizontale. Les canalisations 32 comprennent par exemple une pluralité de perforation préférentiellement faisant face au tamis 26. Les canalisations 32 sont également dénommées flûtes.

La solution riche va s'écouler au travers de ces flûtes. Les perforations des canalisations 32 sont avantageusement uniformément agencées sous forme de petits trous permettant une répartition homogène du débit de solution riche. Le placement de ces petits trous tout le long des canalisations 32 permet de faire jaillir la solution par des jets identiques dans le réservoir tamisé, plus précisément dans les bandes de tamis 28, et donc de ne pas provoquer de débit plus important à un endroit, et d'impacter l'écoulement de la solution à travers le tamis 26.

Tel qu'illustré, les canalisations 32 sont parallèles les unes aux autres et agencés au regard des bandes de tamis 28. Les canalisations 32 sont préférentiellement alimentées par au moins une canalisation d'amenée 31 de la solution de travail riche. Selon une possibilité, la canalisation d'amenée 31 est connectée fluidiquement aux canalisations 32 par exemple par des canalisations de jonction 33.

L'invention trouve son application pour la production de froid à partir de sources de chaleur à moyenne et basse températures, par exemple entre 30°C à 100°C tels que des rejets thermiques par des procédés industriels, solaire thermique, biomasse, géothermie, turbines à gaz, réseaux de chaleur ;

La mise en oeuvre de l'invention peut se faire dans le domaine des transports sur des moteurs à essence, diesel et turbine à gaz, ou pour le transport maritime ;

La machine à absorption peut être mise en oeuvre dans une pompe à chaleur.

A titre d'exemple, les matériaux de fabrication du dispositif de rectification 25 et plus largement du générateur 1 doivent être compatibles avec l'ammoniac liquide et l'ammoniac gazeux à des températures pouvant atteindre -110 °C : Par exemple, des Polymères tels que PEEK ou PEKK par exemple fabriqué par impression des pièces en 3D par fusion ou encore en Métal : principalement INOX, avec la possibilité d'impression par couches ou de découpe des pièces au laser, combiné à usinage et des soudures.

### Exemple :

Un exemple d'une machine à absorption fonctionnant avec une solution de travail ammoniac/eau (NH₃/ H₂O) selon l'invention intégrant un générateur tel que décrit ci-dessus :

| **Composants** | **Configuration type** |
|---|---|
| Générateur 1 | Température source chaude : 110°C |
| Condenseur 2 | Température source intermédiaire : 27 °C |
| Évaporateur 3 | Surchauffe : 5°C |
| | Température source froide : 18°C |
| Absorbeur 4 | Température source intermédiaire : 27 °C |
| Pompe 6 | Débit : 100 kg/h |

A titre d'exemple, les dimensions suivantes sont utilisées:
- Longueur des plaques adiabatiques 1021 du rectifieur 0.10 m
- Longueur des plaques 1002,1003 du désorbeur 0.25 m
- Largeur des plaques 1002, 1003 du désorbeur 0.150 m
- Épaisseur des plaques1002, 1003 du désorbeur 0.006 m

Une telle machine à absorption permet d'obtenir une pureté de la vapeur d'ammoniac inférieure à 0.98 en fraction massique.

L'invention n'est pas limitée aux modes de réalisations précédemment décrits et s'étend à tous les modes de réalisation couverts par les revendications.

### Références

1.Générateur
2.Condenseur
3. Évaporateur
4.Absorbeur
6. Pompe
7.Valve d'expansion solution
8.Valve d'expansion réfrigérant
11.Connexion fluidique du générateur au condenseur
12.Connexion fluidique du condenseur à l'évaporateur
13.Connexion fluidique de l'évaporateur à l'absorbeur
14.Connexion fluidique de l'absorbeur au générateur
15.Connexion fluidique du générateur à l'absorbeur
20.Désorbeur
21.Rectifieur
22.Module de distribution
23.Module de prédistribution
24.Système de distribution
25.Dispositif de rectification
26.Tamis collecteur
27.Bandes de passages
28.Bandes de tamis
29. Cadre
30. Cheminées
31.Canalisation d'amenée
32.Canalisation percée / flûte
33.Canalisation de jonction
34.Encoches
35. Parois
100. Bâti
101.Première zone
102. Deuxième zone
1021.Plaque adiabatique
1001.Première plaque du bâti
1002.Plaque
1003.Plaque
1004.Deuxième plaque du bâti
110.Entrée source chaude
111.Sortie source chaude
112.Entrée solution de travail riche en fluide frigorigène
113.Sortie solution de travail pauvre en fluide frigorigène
114.Sortie vapeur de fluide frigorigène

## Revendications

1. Générateur (1) pour machine à absorption comprenant un bâti (100) définissant un volume intérieur comprenant une première zone (101) comprenant un désorbeur configuré pour recevoir une solution de travail comprenant un fluide frigorigène et un absorbant et destiné à la production de vapeur de fluide frigorigène **caractérisé en ce que** le désorbeur comprend un échangeur à plaques à films tombants et **en ce que** le bâti (100) comprend une deuxième zone (102) agencée au-dessus de la première zone (101) comprenant un rectifieur adiabatique comprenant une pluralité de plaques adiabatiques (1021) et destinée à l'élimination de trace de vapeur d'absorbant dans la vapeur de fluide frigorigène produite dans la première zone (101), le désorbeur et le rectifieur sont fluidiquement connectés par superposition de la pluralité de plaques adiabatiques (1021) et de plaques (1002, 1003) à films tombants, les plaques adiabatiques (1021) et les plaques à films tombants (1002, 1003) étant agencées les unes par rapport aux autres de sorte que les plaques à films tombants (1002, 1003) s'étendent dans un plan contenant les directions x et y et les plaques adiabatiques s'étendent dans un plan contenant les directions y et z.

2. Générateur selon la revendication précédente dans lequel le bâti (100) comprend :
- au moins une entrée (112) configurée pour amener la solution de travail riche en fluide frigorigène dans la deuxième zone (102),
- au moins une sortie (113) configurée pour assurer la sortie de la solution de travail pauvre en fluide frigorigène de la première zone (101),
- au moins une sortie (112) configurée pour assurer la sortie de la vapeur de fluide frigorigène produite de la deuxième zone (102),
- au moins une entrée (110) configurée pour amener une source chaude dans la première zone (101),
- au moins une sortie (111) configurée pour assurer la sortie de la source chaude refroidie de la première zone (101).

3. Générateur selon la revendication précédente dans lequel l'entrée (112) configurée pour amener la solution de travail riche en fluide frigorigène dans la deuxième zone (102) et la sortie (113) configurée pour assurer la sortie de la solution de travail pauvre en fluide frigorigène de la première zone (101) sont agencées pour assurer une circulation descendante de la solution de travail au travers de la deuxième zone (102) puis de la première zone (101).

4. Générateur selon l'une quelconque des deux revendications précédentes dans lequel la sortie (114) configurée pour assurer la sortie de la vapeur de fluide frigorigène produite de la deuxième zone (102) est agencée pour assurer une circulation de la vapeur produite ascendante au travers de la première zone (101) puis de la deuxième zone (102).

5. Générateur selon l'une quelconque des trois revendications précédentes dans lequel l'entrée (110) configurée pour amener une source chaude dans la première zone (101) et la sortie (111) configurée pour assurer la sortie de la source chaude refroidie de la première zone (101) sont agencées pour assurer une circulation ascendante de la source chaude au travers de la première zone (101).

6. Générateur selon l'une quelconque des revendications précédentes dans lequel le bâti (100) est configuré pour former un générateur (1) monobloc intégrant le désorbeur et le rectifieur.

7. Machine à absorption pour la production de froid comprenant un absorbeur (4), un générateur (1), un condenseur (2), un évaporateur (3) et un circuit fluidique d'absorption apte à recevoir une solution de travail comprenant un fluide frigorigène et un absorbant, le circuit fluidique reliant le générateur (1) au condenseur (2), le condenseur (2) à l'évaporateur (3), l'évaporateur (3) à l'absorbeur (4) et l'absorbeur (4) au générateur (1) **caractérisé en ce que** le générateur (1) est un générateur (1) selon l'une quelconque des revendications précédentes.

8. Machine à absorption selon la revendication précédente comprenant une solution de travail comprenant le couple ammoniac/eau (NH₃/H₂O).

9. Procédé de production de vapeur de fluide frigorigène par un générateur (1) selon l'une quelconque des revendications 1 à 6 **caractérisé en ce qu'**il comprend
- la circulation d'une source de chaleur dans la première zone (101) suivant une direction ascendante, et
- une circulation de solution de travail dans la deuxième zone (102) puis dans la première zone (101) suivant une direction descendante à contre-courant de la source de chaleur dans la première zone (101), et
- une circulation de vapeur de fluide frigorigène, produite dans la première zone (101), dans la première zone (101) puis dans la deuxième zone (102) suivant une direction ascendante à contre-courant de la solution de travail.

## Patentansprüche

1. Generator (1) für Absorptionsmaschine, der ein Gestell (100) umfasst, das einen Innenraum definiert, der eine erste Zone (101) umfasst, die einen Desorber umfasst, der dazu konfiguriert ist, eine Arbeitslösung aufzunehmen, die ein Kältemittel und ein Absorptionsmittel umfasst und zur Erzeugung von Kältemitteldampf bestimmt ist, **dadurch gekennzeichnet, dass** der Desorber einen Fallfilm-Plattenwärmetauscher umfasst, und dass das Gestell (100) eine zweite Zone (102) umfasst, die über der ersten Zone (101) eingerichtet ist, die einen adiabatischen Rektifikator umfasst, der eine Vielzahl adiabatischer Platten (1021) umfasst und zur Eliminierung von Absorptionsmitteldampfspur aus dem Kältemitteldampf, der in der ersten Zone (101) erzeugt wird, bestimmt ist, wobei der Desorber und der Rektifikator fluidisch durch Überlagerung der Vielzahl adiabatischer Platten (1021) und Fallfilm-Platten (1002, 1003) verbunden sind, wobei die adiabatischen Platten (1021) und die Fallfilm-Platten (1002, 1003) zueinander derart eingerichtet sind, dass sich die Fallfilm-Platten (1002, 1003) in einer Ebene erstrecken, die die x- und die y-Richtung enthält, und sich die adiabatisches Platten in einer Ebene erstrecken, die die y- und die z- Richtung enthält.

2. Generator nach dem vorstehenden Anspruch, wobei das Gestell (100) Folgendes umfasst:
- mindestens einen Eingang (112), der dazu konfiguriert ist, die kältemittelreiche Arbeitslösung in die zweite Zone (102) zu bringen,
- mindestens einen Ausgang (113), der dazu konfiguriert ist, den Ausgang der kältemittelarmen Arbeitslösung aus der ersten Zone (101) sicherzustellen,
- mindestens einen Ausgang (112), der dazu konfiguriert ist, den Ausgang des Kältemitteldampfs, der in der zweiten Zone (102) erzeugt wird, sicherzustellen,
- mindestens einen Eingang (110), der dazu konfiguriert ist, eine Wärmequelle in die erste Zone (101) zu bringen,
- mindestens einen Ausgang (111), der dazu konfiguriert ist, den Ausgang der abgekühlten Wärmequelle aus der ersten Zone (101) sicherzustellen.

3. Generator nach dem vorstehenden Anspruch, wobei der Eingang (112), der dazu konfiguriert ist, die kältemittelreiche Arbeitslösung in die zweite Zone (102) zu bringen, und der Ausgang (113), der dazu konfiguriert ist, den Ausgang der kältemittelarmen Arbeitslösung aus der ersten Zone (101) sicherzustellen, dazu eingerichtet sind, eine absteigende Zirkulation der Arbeitslösung durch die zweite Zone (102) und dann die erste Zone (101) sicherzustellen.

4. Generator nach einem der beiden vorstehenden Ansprüche, wobei der Ausgang (114), der dazu konfiguriert ist, den Ausgang des erzeugten Kältemitteldampfs aus der zweiten Zone (102) sicherzustellen, dazu eingerichtet ist, eine aufsteigende Zirkulation des erzeugten Dampfs durch die erste Zone (101) und dann durch die zweite Zone (102) sicherzustellen.

5. Generator nach einem der drei vorstehenden Ansprüche, wobei der Eingang (110), der dazu konfiguriert ist, eine Wärmequelle in die erste Zone (101) zu bringen, und der Ausgang (111), der dazu konfiguriert ist, den Ausgang der abgekühlten Wärmequelle aus der ersten Zone (101) sicherzustellen, dazu eingerichtet sind, eine aufsteigende Zirkulation der Wärmequelle durch die erste Zone (101) sicherzustellen.

6. Generator nach einem der vorstehenden Ansprüche, wobei das Gestell (100) dazu konfiguriert ist, einen einteiligen Generator (1) zu bilden, der den Desorber und den Rektifikator integriert.

7. Absorptionsmaschine zur Kälteerzeugung, die einen Absorber (4), einen Generator (1), einen Kondensator (2), einen Verdampfer (3) und einen Absorptionsfluidkreislauf umfasst, der dazu geeignet ist, eine Arbeitslösung aufzunehmen, die ein Kältemittel und ein Absorptionsmittel umfasst, wobei der Fluidkreislauf den Generator (1) mit dem Kondensator (2), den Kondensator (2) mit dem Verdampfer (3), den Verdampfer (3) mit dem Absorber (4) und den Absorber (4) mit dem Generator (1) verbindet, **dadurch gekennzeichnet, dass** der Generator (1) ein Generator (1) nach einem der vorstehenden Ansprüche ist.

8. Absorptionsmaschine nach dem vorstehenden Anspruch, die eine Arbeitslösung umfasst, die das Paar Ammoniak/Wasser (NH3/H2O) umfasst.

9. Kältemitteldampf-Erzeugungsverfahren durch einen Generator (1) nach einem der Ansprüche 1 bis 6, **dadurch gekennzeichnet, dass** er Folgendes umfasst
- die Zirkulation einer Wärmequelle in der ersten Zone (101) entlang einer aufsteigenden Richtung, und
- eine Arbeitslösungszirkulation in der zweiten Zone (102) und dann in der ersten Zone (101) entlang einer absteigenden Richtung im Gegenstrom zu der Wärmequelle der ersten Zone (101), und
- eine Zirkulation des Kältemitteldampfs, der in der ersten Zone (101) erzeugt wird, in der ersten Zone (101) und dann in der zweiten Zone (102) entlang einer aufsteigenden Richtung im Gegenstrom zu der Arbeitslösung.

## Claims

1. Generator (1) for an absorption machine comprising a frame (100) defining an inner volume comprising a first zone (101) comprising a desorber configured to receive a working solution comprising a refrigerant and an absorbent and intended for the production of refrigerant vapour, **characterised in that** the desorber comprises a falling film plate exchanger, and **in that** the frame (100) comprises a second zone (102) arranged above the first zone (101) comprising an adiabatic rectifier comprising a plurality of adiabatic plates (1021) and intended for the removal of absorbent vapour traces in the refrigerant vapour produced in the first zone (101), the desorber and the rectifier are fluidically connected by superposition of the plurality of adiabatic plates (1021) and of falling film plates (1002, 1003), the adiabatic plates (1021) and the falling film plates (1002, 1003) being arranged against one another, such that the falling film plates (1002, 1003) extend into a plane containing the directions x and y and the adiabatic plates extend into a plane containing the directions y and z.

2. Generator according to the preceding claim, wherein the frame (100) comprises:
- at least one inlet (112) configured to bring the refrigerant-rich working solution into the second zone (102),
- at least one outlet (113) configured to ensure the exiting of the refrigerant-depleted working solution from the first zone (101),
- at least one outlet (112) configured to ensure the exiting of the refrigerant vapour produced in the second zone (102),
- at least one inlet (110) configured to bring a hot source into the first zone (101),
- at least one outlet (111) configured to ensure the exiting of the cooled hot source from the first zone (101).

3. Generator according to the preceding claim, wherein the inlet (112) configured to bring the refrigerant-rich working solution into the second zone (102) and the outlet (113) configured to ensure the exiting of the refrigerant-depleted working solution from the first zone (101) are arranged to ensure a descending circulation of the working solution through the second zone (102), then from the first zone (101).

4. Generator according to any one of the two preceding claims, wherein the outlet (114) configured to ensure the exiting of the refrigerant vapour produced from the second zone (102) is arranged to ensure a circulation of the ascending vapour produced through the first zone (101) then through the second zone (102).

5. Generator according to any one of the three preceding claims, wherein the inlet (110) configured to bring a hot source into the first zone (101) and the outlet (111) configured to ensure the exiting of the cooled hot source from the first zone (101) are arranged to ensure an ascending circulation of the hot source through the first zone (101).

6. Generator according to any one of the preceding claims, wherein the frame (100) is configured to form a one-piece generator (1) integrating the desorber and the rectifier.

7. Absorption machine for the production of cold comprising an absorber (4), a generator (1), a condenser (2), an evaporator (3) and an absorption fluid circuit capable of receiving a working solution comprising a refrigerant and an absorbent, the fluid circuit connecting the generator (1) to the condenser (2), the condenser (2) to the evaporator (3), the evaporator (3) to the absorber (4) and the absorber (4) to the generator (1), **characterised in that** the generator (1) is a generator (1) according to any one of the preceding claims.

8. Absorption machine according to the preceding claim, comprising a working solution comprising the ammoniac/water couple (NH₃/H₂O).

9. Method for producing refrigerant vapour by a generator (1) according to any one of claims 1 to 6, **characterised in that** it comprises
- the circulation of a heat source in the first zone (101) along an ascending direction, and
- a circulation of working solution in the second zone (102), then in the first zone (101) along a descending direction countercurrently from the heat source in the first zone (101), and
- a circulation of refrigerant vapour, produced in the first zone (101), in the first zone (101), then in the second zone (102) along an ascending direction countercurrently from the working solution.
